(19) Europäisches Patentamt
European Patent Office
Office européen des brevets

(11) Veröffentlichungsnummer: **0 054 808**
**B1**

(12) # EUROPÄISCHE PATENTSCHRIFT

(45) Veröffentlichungstag der Patentschrift: **03.07.85**

(51) Int. Cl.⁴: **C 08 G 63/46**, C 08 G 63/18, C 08 C 19/36, C 08 J 5/00

(21) Anmeldenummer: **81110179.9**

(22) Anmeldetag: **05.12.81**

(54) **Thermoplastische Blockcopolyester, Verfahren zu ihrer Herstellung und ihre Verwendung zur Herstellung von Formkörpern.**

(30) Priorität: **19.12.80 DE 3047990**

(43) Veröffentlichungstag der Anmeldung: **30.06.82 Patentblatt 82/26**

(45) Bekanntmachung des Hinweises auf die Patenterteilung: **03.07.85 Patentblatt 85/27**

(84) Benannte Vertragsstaaten: **DE FR GB IT**

(56) Entgegenhaltungen:
**AT - B - 287 308**
**DE - A - 1 961 241**
**DE - A - 2 032 818**
**DE - A - 2 924 895**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Binsack, Rudolf, Dr., Bethelstrasse 4 a, D-4150 Krefeld 1 (DE)**
Erfinder: **Köhler, Karl-Heinz, Dr., Buschstrasse 106, D-4150 Krefeld 1 (DE)**
Erfinder: **Morbitzer, Leo, Dr., Rungestrasse 50, D-5000 Koeln 80 (DE)**
Erfinder: **Bottenbruch, Ludwig, Dr., Woehlerstrasse 5, D-4150 Krefeld 1 (DE)**
Erfinder: **Heitz, Walter, Prof. Dr., Am Schmidtborn 5, D-3575 Kirchhain (DE)**

**EP 0 054 808 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische Blockcopolyester, die sich zur Herstellung von verzugsarmen, aber dennoch hochkristallinen Formkörpern eignen, ein Verfahren zur Herstellung dieser Blockcopolyester aus a) reaktionsfähigen Polyenderivaten, b) Dicarbonsäuren oder ihren reaktionsfähigen Derivaten und c) Diolen sowie die Verwendung dieser thermoplastischen Blockcopolyester zur Herstellung von Formkörpern, vornehmlich von Spritzgussartikeln.

Thermoplastische Polyester haben wegen ihrer wertvollen technologischen Eigenschaften, wie z.B. Steifigkeit, Härte, Abriebfestigkeit, dynamische und thermische Belastbarkeit, als Faserrohstoffe und als Harzkomponenten für Formmassen zunehmend an Bedeutung gewonnen. Aufgrund ihrer hohen Kristallinität werden insbesondere die Polyester auf Basis von Terephthalsäure, Ethylenglykol, Butandiol-1,4 bzw. 1,4-Dimethylolcyclohexan gerne eingesetzt.

Eine unerwünschte Eigenschaft dieser Polyester sind Verzugserscheinungen. Sie treten hauptsächlich bei dünnen Teilen - besonders markant im Falle von Glasfaserverstärkung - auf und schränken die Verwendung der Polyester empfindlich ein. Man hat bereits vorgeschlagen, den Verzug durch Zusatz von aromatischen Polyestern (DE-OS 3 002 814, europäische Patentanmeldung 0 012 505) oder Füllstoffen zu vermindern, musste dies aber durch einen Kristallinitätsabfall erkaufen, der dem Anteil des Zusatzes mindestens proportional war, sehr oft aber noch höher lag. Mit anderen Worten: Den Verzug konnte man nur vermeiden, wenn man gleichzeitig auf die wichtigste Eigenschaft, die die fraglichen Polyester so begehrenswert macht - also die Kristallinität - teilweise verzichtete. Es bestand also ein Bedürfnis nach einer Methode, die es erlaubt, den Verzug von thermoplastischen kristallinen Polyestern zu verringern, gleichzeitig aber die Kristallinität weitgehend zu erhalten, d.h. der Kristallinitätsabfall sollte höchstens dem zugesetzten Anteil proportional, vorzugsweise aber geringer sein.

Als Mass für den Kristallinitätsabfall gilt nachfolgend die relative Kristallinität, definiert durch den Quotienten

$$\frac{\text{Schmelzenthalpie des modifizierten Polyesters,}}{\text{Schmelzenthalpie des unmodifizierten Polyesters}}$$

jeweils gemessen während einer zweiten Aufheizperiode (der erste standardisierte Aufheizvorgang, gefolgt von einer standardisierten Abkühlung und einer standardisierten zweiten Aufheizung - z.B. mit einer Rate von 20°/Minute - gewährleistet die Gleichartigkeit der Vorbehandlung) und bezogen auf den unmodifizierten Polyester als Standard (relative Kristallinität = 1).

Würde z.B. ein Zusatz von 30% Pigment die Schmelzenthalpie eines Polybutylenterephthalats von 51 J/g auf 31 J/g senken, wäre dieser Abfall überproportional, weil die relative Kristallinität 31/51 = 0,608 betragen würde und nur für einen Zusatz von 39,2% Pigment proportional wäre.

Es wurde nun gefunden, dass Blockcopolyester auf Basis von Polyalkylenterephthalaten, die Polyenblöcke enthalten, selbst dann, wenn sie zu dünnen Teilen verarbeitet werden, einen äusserst geringen Verzug und dennoch eine Kristallinität aufweisen, die gegenüber der Kristallinität des unmodifizierten Polyalkylenterephthalats weniger als um das dem Polyenanteil entsprechende Verhältnis abfällt.

Gegenstand der Erfindung sind Blockcopolyester mit einer relativen Viskosität (gemessen in Phenol/o-Dichlorbenzol, Gewichtsverhältnis 1:1, bei 25°C) von 1,15 bis 3,0, vorzugsweise 1,3 bis 2,5, die - die Endgruppen nicht berücksichtigt - aus

A) 1-60, vorzugsweise 10-50, insbesondere 21-40, Gew.-%, bezogen auf Blockcopolyester, langkettiger Einheiten der Formel

$$-O-M-O-\overset{\overset{O}{\|}}{C}-S-\overset{\overset{O}{\|}}{C}- \qquad \text{Ia}$$

und/oder

$$-\overset{\overset{O}{\|}}{C}-M-\overset{\overset{O}{\|}}{C}-O-G-O- \qquad \text{Ib}$$

und/oder

$$-O-\overset{\overset{O}{\|}}{C}-O-M-O-\overset{\overset{O}{\|}}{C}-O-G-O- \qquad \text{Ic}$$

und

B) 40-99, vorzugsweise 50-90, insbesondere 60-79, Gew.-%, bezogen auf Blockcopolyester, kurzkettiger Einheiten der Formel

$$-O-G-O-\overset{\overset{O}{\|}}{C}-S-\overset{\overset{O}{\|}}{C}- \qquad \text{II}$$

bestehen, dadurch gekennzeichnet, dass

M einen zweiwertigen Polymethylenrest mit endständigen Verknüpfungsstellen und einem mittleren Molekulargewicht $\overline{M}_n$ von 400 bis 5000, vorzugsweise 450 bis 3000, insbesondere 500 bis 1200, wobei gegebenenfalls vorhandene Seitenketten nur Methyl- und/oder Ethylgruppen sein können und der dem Polymethylenrest zugrundeliegende Polydienrest mindestens 50 Mol-%, vorzugsweise mindestens 70 Mol-%, 1,4-Verknüpfungen aufweist,

G einen zweiwertigen aliphatischen Rest mit 1 bis 12 C-Atomen und/oder einen zweiwertigen cycloaliphatischen Rest mit 6 bis 12 C-Atomen

mit einem Molekulargewicht unter 300, wobei mindestens 70 Mol-% von G einen einheitlichen Rest darstellen,
S eine Einfachbindung oder einen zweiwertigen aliphatischen, cycloaliphatischen und/oder aromatischen Rest mit 1 bis 14 C-Atomen und mit einem Molekulargewicht unter 300, wobei mindestens 70 Mol-% von S 1,4-Phenylenreste sind, darstellen.

«Endgruppen» in diesem Zusammenhang sind einwertige Reste, die aus den eingesetzten Ausgangsverbindungen stammen und zusammen mit den Teilstrukturen Ia, Ib und/oder Ic und II das Makromolekül des erfindungsgemässen Blockcopolyesters bilden, selbst aber keine Teilstrukturen Ia–Ic bzw. II enthalten.

Die «langkettige Einheit» A ist der Rest des hydrierten Reaktionsprodukts

a) eines Hydroxyl-terminierten Polydiens mit einer Dicarbonsäure oder deren reaktionsfähigem Derivat, vgl. Formel Ia;
b) eines Carboxyl-, Alkylcarboxi-, Cycloalkylcarboxi-, Benzylcarboxi- oder Arylcarboxi-terminierten Polydiens mit einem Diol, vgl. Formel Ib;
c) eines Alkylcarbonat-, Cycloalkylcarbonat-, Benzylcarbonat- oder Arylcarbonat-terminierten Polydiens mit einem Diol, vgl. Formel Ic.

Weiterer Gegenstand der Erfindung ist ein Verfahren zur Herstellung von Blockcopolyestern mit einer relativen Viskosität (gemessen in Phenol/o-Dichlorbenzol, Gewichtsverhältnis 1:1, bei 25°C) von 1,15 bis 3,0, vorzugsweise 1,3 bis 2,5, dadurch gekennzeichnet, dass man

1. Hydroxyl-, Carboxyl-, Alkylcarboxi-, Cycloalkylcarboxi-, Benzylcarboxi-, Arylcarboxi-, Alkylcarbonat-, Cycloalkylcarbonat-, Benzylcarbonat- oder Arylcarbonat-terminierte Polymethylene, wobei der Polymethylenrest endständige Verknüpfungsstellen und ein mittleres Molekulargewicht $\overline{M}_n$ von 400 bis 5000, vorzugsweise 450 bis 3000, insbesondere 500 bis 1200, aufweist, gegebenenfalls vorhandene Seitenketten nur Methyl- und/oder Ethylgruppen sein können und der dem Polymethylenrest zugrundeliegende Polydienrest mindestens 50 Mol-%, vorzugsweise mindestens 70 Mol-%, 1,4-Verknüpfungen aufweist, mit

2. mindestens einem Dicarbonsäurederivat der Formel

$$R^1\text{-}O\overset{\overset{\displaystyle O}{\|}}{C}\text{-}S\text{-}\overset{\overset{\displaystyle O}{\|}}{C}OR^2$$

worin

$R^1$, $R^2$ ein Wasserstoffatom oder $C_1$–$C_{10}$-Alkyl bedeuten und
S die oben angegebene Bedeutung hat, und

3. mindestens einem Diol der Formel

HO–G–OH

worin

G die oben angegebene Bedeutung hat, umestert bzw. verestert und anschliessend polykondensiert, bis die gewünschte Viskosität erreicht ist, wobei die Mengen der Ausgangskomponenten so gewählt werden, dass der erhaltene Blockcopolyester – die Endgruppen nicht berücksichtigt –
1–60, vorzugsweise 10–50, insbesondere 21–40, Gew.-% langkettiger Einheiten der Formel Ia, Ib und/oder Ic und
40–99, vorzugsweise 50–90, insbesondere 60–79, Gew.-% kurzkettiger Einheiten der Formel II enthält.

Ein weiterer Gegenstand der Erfindung ist die Verwendung dieser Blockcopolyester zur Herstellung von Formkörpern, insbesondere von Spritzgussartikeln.

Die zur Herstellung der erfindungsgemässen Blockcopolyester bevorzugten Polyenderivate sind hydrierte Derivate des Polybutadiens, Polyisoprens, Polychloroprens und des Poly-2,3-dimethylbutadiens. Sie besitzen zwei endständige reaktive Gruppen. Derartige Polyenderivate sind bekannt; sie können in Gegenwart von radikalbildenden Initiatoren, wie z.B. Dialkylperoxidicarbonaten oder Azodicarbonsäureestern durch Massepolymerisation und anschliessende Hydrierung hergestellt werden (DE-OS 2 900 880 und 2 908 298). Die Polyene mit endständigen Hydroxylgruppen können aus den Polyenen mit endständigen Carbonatestergruppen durch Hydrolyse oder aus den Polyenen mit endständigen Carbonsäureestergruppen durch Reduktion der Estergruppe hergestellt werden.

Die mittleren Molekulargewichte der Polyenkomponenten werden dampfdruckosmometrisch in Benzol bestimmt.

Zur Herstellung der erfindungsgemässen Blockcopolyester bevorzugte Diole HO–G–OH sind Ethylenglykol, Propandiol-1,3, Butandiol-1,4, Hexandiol-1,6 und Cyclohexandimethanol-1,4.

Zur Herstellung der erfindungsgemässen Blockcopolyester bevorzugte Dicarbonsäuren HOOC–S–COOH oder den bevorzugten Dicarbonsäurederivaten $R^1OOC–S–COOR^2$ zugrundeliegende Dicarbonsäuren sind Oxalsäure, Malonsäure, Bernsteinsäure, Glutarsäure, Adipinsäure, Pimelinsäure, Azelainsäure, Sebacinsäure, insbesondere Cyclohexandicarbonsäuren, wie z.B. Cyclohexandicarbonsäure-1,4, und Adipinsäure; eine besonders bevorzugte Klasse der Dicarbonsäuren stellen die aromatischen Dicarbonsäuren dar. Beispiele für aromatische Dicarbonsäuren sind Isophthalsäure, Terephthalsäure, Diphenyldicarbonsäure-1,4, Bis-(p-carboxiphenyl)-methan, Naphthalindicarbonsäure-1,5 und -2,6.

Die bevorzugtesten Diole sind Ethylenglykol und Butandiol-1,4. Die bevorzugteste Dicarbonsäure ist Terephthalsäure.

Die zur Herstellung der erfindungsgemässen

Blockcopolyester eingesetzten Polyeneinheiten M und die Dicarbonsäureeinheiten

$$\overset{\overset{O}{\|}}{C}-S-\overset{\overset{O}{\|}}{C}$$

werden in molaren Anteilen, in denen sie im Reaktionsgemisch eingesetzt werden, in den Blockcopolyester eingebaut. Das Diol HO-G-OH wird, auch wenn es im Überschuss im Reaktionsgemisch vorliegt, äquimolar zur Summe der eingesetzten Dicarbonsäurederivate $R^1OOC-S-COOR^2$ und der eingesetzten Polyen-dicarbonsäure HOOC-M-COOH bzw. als äquimolekulare Differenz der eingesetzten Dicarbonsäurederivate $R^1OOC-S-COOR^2$ und des eingesetzten Polyen-diols HO-M-OH bzw. Polyen-dicarbonatesters in den Blockcopolyester chemisch eingebaut. Werden Gemische von Diolen HO-G-OH eingesetzt, so hängt der Anteil der eingebauten Diole von den Siedepunkten und den relativen Reaktivitäten der Diole ab.

Bevorzugte erfindungsgemässe Blockcopolyester sind Reaktionsprodukte aus Ethylenglykol sowie den Diolen, Dicarbonsäuren, Dicarbonsäuredialkylestern oder Dicarbonaten von hydriertem Polybutadien, hydriertem Poly-2,3-dimethylbutadien, hydriertem Polychloropren und hydriertem Polyisopren.

Die erfindungsgemässen Blockcopolyester können als Endgruppen – jeweils bezogen auf die Teilstrukturen Ia-Ic bzw. II – z.B. Carbonyl-ständig: Hydroxyl, O-$C_1$-$C_{10}$-Alkyl, Oxi-ständig: Wasserstoff und Carbonat-ständig: Alkyl oder Cycloalkyl mit 1 bis 12 C-Atomen sein.

Die Viskosität der erfindungsgemässen Blockcopolyester kann z.B. im Ubbelohde-Viskosimeter gemessen werden.

Die erfindungsgemässen Blockcopolyester können nach den für thermoplastische Polyester üblichen Herstellungsverfahren hergestellt werden. Der erste Reaktionsschritt besteht daher aus einem Umesterungsschritt, wenn die Ester der Dicarbonsäure bzw. der Polyen-dicarbonsäure eingesetzt werden, oder aus einem Veresterungsschritt, wenn die jeweiligen freien Dicarbonsäuren eingesetzt werden. Auch die Kombination von Veresterung und Umesterung in der ersten Reaktionsstufe ist möglich, nämlich dann, wenn sowohl Dicarbonsäureester als auch freie Dicarbonsäure eingesetzt werden. An die erste Reaktionsstufe der Umesterung bzw. Veresterung schliesst sich die normale Polykondensation bei höheren Temperaturen und verringertem Druck an.

Es hat sich als vorteilhaft erwiesen, das verwendete Polyenderivat zunächst mit einem Überschuss an Dicarbonsäure(diester) $R^1OOC-S-COOR^2$ umzusetzen, wenn Polyendiole bzw. Polyen-dicarbonatester verwendet werden, und mit einem Überschuss an Diol HO-G-OH, wenn Polyen-dicarbonsäure(diester) eingesetzt werden.

Zur Erhöhung des bei der Polykondensation in der Schmelze erzielten Molekulargewichtes der Blockcopolyester kann es sich empfehlen, eine für thermoplastische Polyester bekannte Festphasenpolykondensation anzuschliessen. Hierbei wird üblicherweise 5 bis 50°C unter dem Schmelzpunkt des Polyesters im Inertgasstrom oder im Vakuum so lange erhitzt, bis das gewünschte Molekulargewicht erreicht ist.

Die erfindungsgemässen Blockcopolyester besitzen, bezogen auf den Polyenanteil, extrem hohe Schmelzpunkte. Ausserdem zeichnen sie sich – wie oben bereits erwähnt – durch eine überraschend hohe Kristallinität aus, erkennbar an der nur wenig verminderten Schmelztemperatur und der Schmelzenthalpie der kristallinen Anteile.

Die erfindungsgemässen Blockcopolyester können in der üblichen Weise modifiziert werden. Sie können z.B. Verstärkungs- und Füllstoffe, Flammschutzmittel, Stabilisatoren, Nukleier-, Gleit- und Formtrennmittel sowie Farbstoffe und Pigmente enthalten.

Die Verstärkungs- und Füllstoffe, die zur Erhöhung der Steifigkeit und der Festigkeit dienen, werden in üblichen Mengen von 5 bis 40 Gew.-%, bezogen auf die Summe aus Blockcopolyester und Zusätze, verwendet. Es kommen beispielsweise in Frage: Kaolin, Quarz, Glimmer, Wollastonit, Talkum, Titandioxid, Aluminiumoxid, vorzugsweise Glasfasern.

Als Flammschutzmittel kommen die für thermoplastische Polyester bekannten Verbindungen in Frage, also z.B. organische Halogenverbindungen, wie Deca- und Octabromdiphenyl, Tetrabrombisphenolpolycarbonat. In der Regel wird ein weiteres Flammschutzmittel verwendet, das als Synergist wirkt, vorzugsweise Antimontrioxid. Die einzusetzenden Mengen an Flammschutzmittel liegen im allgemeinen zwischen 10 und 25 Gew.-%, bezogen auf die Summe aller Bestandteile.

Die erfindungsgemässen Blockcopolyester lassen sich nach den für thermoplastische Formmassen typischen Spritzguss- und Extrusions-Verfahren zu den verschiedensten Formkörpern verformen, z.B. zu Karosserieteilen.

Beispiele

Herstellung von Polytetramethylen-dicarbonsäuredimethylester:

Die Herstellung des in den nachfolgenden Beispielen verwendeten Polytetramethylen-dicarbonsäuredimethylesters erfolgte durch Massepolymerisation von Butadien in Gegenwart von Azoisobuttersäuremethylester und anschliessende katalytische Hydrierung in Tetrahydrofuran-Lösung in Gegenwart von Palladiumkohle entsprechend DE-OS 2 000 880. Man erhielt Produkte mit einem mittleren Molekulargewicht $\overline{M}_n$ von 750 und 78 Mol-% 1,4-Verknüpfungen (Typ A) sowie mit einem mittleren Molekulargewicht $\overline{M}_n$ von 1200 und 80 Mol-% 1,4-Verknüpfungen (Typ B).

Herstellung von Poly-methyl-tetramethylen-dicarbonsäuredimethylester:

Die Herstellung erfolgte analog der oben beschriebenen Herstellung von Polytetramethylen-

dicarbonsäuredimethylester. Man erhielt ein Produkt mit einem mittleren Molekulargewicht $\overline{M}_n$ von 900 und 76 Mol-% 1,4-Verknüpfungen (Typ C).

Die Molekulargewichte von A, B und C sind Zahlenmittel $\overline{M}_n$ und mittels Dampfdruckosmose in Benzol bestimmt.

Herstellung der Blockcopolyester:

Beispiele 1–4

In einem mit Rührer und mit für eine Destillation ausgerüsteten Reaktionsgefäss wurden unter Stickstoffatmosphäre folgende Reaktionskomponenten bei 200°C eine Stunde umgesetzt:

100,9 Gew.-Teile Butandiol-1,4,
Y Gew.-Teile Polytetramethylen-dicarbonsäuredimethylester, Typ A, und
0,092 Gew.-Teile Titantetraisopropylat.

Nach Beendigung der Methanol-Abspaltung wurden dem Reaktionsgemisch 155,3 Gew.-Teile Dimethylterephthalat zugesetzt.

Im Anschluss daran wurde unter Stickstoff-Atmosphäre 3 Stunden bei 200°C gerührt, wobei Methanol abdestillierte. Anschliessend wurde die Temperatur des Reaktionsgemisches innerhalb von 30 Minuten auf 250°C erhöht, während gleichzeitig der Druck im Reaktionsgefäss von Normaldruck auf ca. 0,66 mbar (0,5 Torr) abgesenkt wurde. Das Reaktionsgemisch wurde bei diesen Bedingungen 40 Minuten gerührt, wobei die Viskosität der Schmelze gegen Ende der Reaktion stark anstieg. Der erhaltene Blockcopolyester wurde in Wasser abgesponnen, zerkleinert und nach dem Trocknen auf einer Spritzgussmaschine bei 250°C zu Normkleinstäben verspritzt.

Schmelztemperatur und Schmelzwärme der kristallinen Anteile der Blockcopolyester wurden durch Differential-Thermoanalyse (DSC-Methode) ermittelt. Die Ergebnisse sind der Tabelle 1 zu entnehmen:

Tabelle 1

| Beispiel | Polytetramethylen-dicarbonsäuredimethylester, Typ A Y [Gew.-Tle] | Gew.-%[1] | Blockpolyester rel. Viskosität[2] | Fp.[3] [°C] | Schmelzenthalpie[4] [J/g] |
|---|---|---|---|---|---|
| 1 | 9,5 | 5,3 | 1,49 | 224 | 50 |
| 2 | 20 | 10,5 | 1,43 | 224 | 49 |
| 3 | 44 | 20,6 | 1,34 | 221 | 45 |
| 4 (Vergleich) | – | – | 1,48 | 225 | 51 |

[1] bezogen als Esteranteil auf den gesamten Blockcopolyester
[2] gemessen in Phenol/o–Dichlorbenzol (1:1 Gew.-Tle) bei 25°C im Ubbelohde-Viskosimeter
[3] Maximum der Hauptschmelztemperatur, gemessen nach der DSC-Methode beim 2. Aufheizen
[4] Gesamtschmelzwärme, gemessen nach der DSC-Methode beim 2. Aufheizen

Beispiele 5–7

Herstellung und Methoden analog den Beispielen 1–4; anstelle von Typ A wurde Typ B eingesetzt.

Tabelle 2

| Beispiel | Polytetramethylen-dicarbonsäuredimethylester Typ B Y [Gew.-Tle] | Gew.-% | Blockcopolyester rel. Viskosität | Fp. [°C] | Schmelzenthalpie [J/g] |
|---|---|---|---|---|---|
| 5 | 9,5 | 5,2 | 1,44 | 225 | 51 |
| 6 | 20 | 10,4 | 1,43 | 225 | 50 |
| 7 | 44 | 20,3 | 1,33 | 224 | 42 |

Beispiele 8 und 9

Herstellung und Methoden analog den Beispielen 1–4; anstelle von Typ A wurde Typ C eingesetzt.

Tabelle 3

| Beispiel | Polymethyl-tetramethylen-dicarbonsäuredimethylester Typ C Y [Gew.-Tle] | Gew.-% | Blockcopolyester rel. Viskosität | Fp. [°C] | Schmelzenthalpie [J/g] |
|---|---|---|---|---|---|
| 8 | 35,0 | 16,9 | 1,40 | 223 | 46 |
| 9 | 60,0 | 25,9 | 1,38 | 219 | 41 |

**Patentansprüche**

1. Blockcopolyester mit einer relativen Viskosität (gemessen in Phenol/o-Dichlorbenzol, Gewichtsverhältnis 1:1, bei 25°C) von 1,15 bis 3,0, die – die Endgruppen nicht berücksichtigt – aus
A) 1–60 Gew.-%, bezogen auf Blockcopolyester, langkettiger Einheiten der Formel

```
         O   O
         ||  ||
-O-M-O-C-S-C-          Ia
```

und/oder

```
 O    O
 ||   ||
-C-M-C-O-G-O-          Ib
```

und/oder

```
     O          O
     ||         ||
-O-C-O-M-O-C-O-G-O-    Ic
```

und
B) 40–99 Gew.-%, bezogen auf Blockcopolyester, kurzkettiger Einheiten der Formel

```
         O   O
         ||  ||
-O-G-O-C-S-C-          II
```

bestehen, dadurch gekennzeichnet, dass
M einen zweiwertigen Polymethylenrest mit endständigen Verknüpfungsstellen und einem mittleren Molekulargewicht $\overline{M}_n$ von 400 bis 5000, wobei gegebenenfalls vorhandene Seitenketten nur Methyl- und/oder Ethylgruppen sein können und der dem Polymethylenrest zugrundeliegende Polydienrest mindestens 50 Mol-% 1,4-Verknüpfungen aufweist,
G einen zweiwertigen aliphatischen Rest mit 1 bis 12 C-Atomen und/oder einen zweiwertigen cycloaliphatischen Rest mit 6 bis 12 C-Atomen mit einem Molekulargewicht unter 300, wobei mindestens 70 Mol-% von G einen einheitlichen Rest darstellen,
S eine Einfachbindung oder einen zweiwertigen aliphatischen, cycloaliphatischen und/oder aromatischen Rest mit 1 bis 14 C-Atomen und mit einem Molekulargewicht unter 300, wobei mindestens 70 Mol-% von S 1,4-Phenylenreste sind, darstellen.

2. Blockcopolyester nach Anspruch 1, dadurch gekennzeichnet, dass sie eine relative Viskosität von 1,3 bis 2,5 besitzen.

3. Blockcopolyester nach Ansprüchen 1 und 2, dadurch gekennzeichnet, dass sie aus
10–50 Gew.-% langkettiger Einheiten A und
90–50 Gew.-% kurzkettiger Einheiten B
bestehen.

4. Blockcopolyester nach Ansprüchen 1–3, dadurch gekennzeichnet, dass M ein mittleres Molekulargewicht $\overline{M}_n$ von 450 bis 3000 besitzt.

5. Blockcopolyester nach Ansprüchen 1–4, dadurch gekennzeichnet, dass M ein mittleres Molekulargewicht $\overline{M}_n$ von 500 bis 1200 besitzt.

6. Blockcopolyester nach Ansprüchen 1–5, dadurch gekennzeichnet, dass der dem Polymethylenrest M zugrundeliegende Polydienrest mindestens 70 Mol-% 1,4-Verknüpfungen aufweist.

7. Blockcopolyester nach Ansprüchen 1–6, dadurch gekennzeichnet, dass S einen 1,4-Phenylenrest bedeutet.

8. Blockcopolyester nach Ansprüchen 1–7, dadurch gekennzeichnet, dass G einen Ethylen- oder 1,4-Butylenrest bedeutet.

9. Verfahren zur Herstellung der Blockcopolyester nach Ansprüchen 1–8, dadurch gekennzeichnet, dass man
1. Hydroxyl-, Carboxyl-, Alkylcarboxi-, Cycloalkylcarboxi-, Benzylcarboxi-, Arylcarboxi-, Alkylcarbonat-, Cycloalkylcarbonat-, Benzylcarbonat- oder Arylcarbonat-terminierte Polymethylene, wobei der Polymethylenrest endständige Verknüpfungsstellen und ein mittleres Molekulargewicht $\overline{M}_n$ von 400 bis 5000 (vorzugsweise 450 bis 3000, insbesondere 500 bis 1200), aufweist, gegebenenfalls vorhandene Seitenketten nur Methyl- und Ethylgruppen sein können und der dem Polymethylenrest zugrundeliegende Polydenrest mindestens 50 Mol-% (vorzugsweise mindestens 70 Mol-%), 1,4-Verknüpfungen aufweist, mit
2. mindestens einem Dicarbonsäurederivat der Formel

```
   O    O
   ||   ||
R¹-OC-S-COR²
```

worin

$R^1$, $R^2$ ein Wasserstoffatom oder $C_1$–$C_{10}$-Alkyl bedeuten und
S die oben angegebene Bedeutung hat, und
3. mindestens einem Diol der Formel

HO–G–OH

worin
G die oben angegebene Bedeutung hat, umestert bzw. verestert und anschliessend polykondensiert, bis die gewünschte Viskosität erreicht ist, wobei die Mengen der Ausgangskomponenten so gewählt werden, dass der erhaltene Blockcopolyester – die Endgruppen nicht berücksichtigt –
1–60 Gew.-% langkettiger Einheiten der Formeln Ia, Ib und/oder Ic und
40–99 Gew.-% kurzkettiger Einheiten der Formel II enthält.

10. Verwendung der Blockcopolyester nach Ansprüchen 1–8 zur Herstellung von Formkörpern.

**Claims**

1. Block copolyesters having a relative viscosity (measured in phenol/o-dichlorobenzene, ratio

by weight 1:1, at 25°C) of 1.15 to 3.0 and – not including the terminal groups – consisting of
A) 1–60% by weight, based on the block copolyester, of long-chain units of the formula

O O<br>
‖ ‖<br>
-O-M-O-C-S-C- Ia

and/or

O O<br>
‖ ‖<br>
-C-M-C-O-G-O- Ib

and/or

O O<br>
‖ ‖<br>
-O-C-O-M-O-C-O-G-O- Ic

and
B) 40–99% by weight, based on the block copolyester, of short-chain units of the formula

O O<br>
‖ ‖<br>
-O-G-O-C-S-C- II

characterised in that
M represents a difunctional polymethylene radical containing terminal bonding sites and having an average molecular weight $\overline{M}_n$ of 400 to 5,000 and any side chains present may only be methyl and/or ethyl groups and the polydiene radical on which the polymethylene radical is based contains at least 50 mole% of 1,4-bonds,
G represents a difunctional aliphatic radical containing 1 to 12 C atoms and/or a difunctional cycloaliphatic radical containing 6 to 12 C atoms and having a molecular weight below 300, at least 70 mole% of G representing one and the same radical, and
S represents a single bond or a difunctional aliphatic, cycloaliphatic and/or aromatic radical containing 1 to 14 C atoms and having a molecular weight below 300, at least 70 mole% of S being 1,4-phenylene radicals.

2. Block copolyesters according to Claim 1, characterised in that they have a relative viscosity of 1.3 to 2.5.

3. Block copolyesters according to Claims 1 and 2, characterised in that they consist of
10–50% by weight of long-chain units A and
90–50% by weight of short-chain units B.

4. Block copolyesters according to Claims 1–3, characterised in that M has an average molecular weight $\overline{M}_n$ of 450 to 3,000.

5. Block copolyesters according to Claims 1–4, characterised in that M has an average molecular weight $\overline{M}_n$ of 500 to 1,200.

6. Block copolyesters according to Claims 1–5, characterised in that the polydiene radical on which the polymethylene radical M is based has at least 70 mole% of 1,4-bonds.

7. Block copolyesters according to Claims 1–6, characterised in that S denotes a 1,4-phenylene radical.

8. Block copolyesters according to Claims 1–7, characterised in that G denotes an ethylene or 1,4-butylene radical.

9. Process for the production of the block copolyesters according to Claims 1–8, characterised in that
1. hydroxyl-, carboxyl-, alkylcarboxy-, cycloalkylcarboxy-, benzylcarboxy-, arylcarboxy-, alkyl carbonate-, cycloalkyl carbonate-, benzyl carbonate- or aryl carbonate-terminated polymethylenes,
wherein the polymethylene radical has terminal bonding sites and an average molecular weight $\overline{M}_n$ of 400 to 5,000 (preferably 450 to 3,000, in particular 500 to 1,200), any side chains present may only be methyl and ethyl groups and the polydiene radical on which the polymethylene radical is based contains at least 50 mole% (preferably at least 70 mole%) of 1,4-bonds, are transesterified or esterified with
2. at least one dicarboxylic acid derivative of the formula

O O<br>
‖ ‖<br>
$R^1$-OC-S-COR$^2$

wherein
$R^1$ and $R^2$ denote a hydrogen atom or $C_1$–$C_{10}$-alkyl and
S has the abovementioned meaning, and
3. at least one diol of the formula

HO-G-OH

wherein

G has the abovementioned meaning, followed by polycondensation until the required viscosity is reached, the quantities of the starting components being selected such that the block copolyester obtained contains – not including the terminal groups –
1–60% by weight of long-chain units of the formulae Ia, Ib and/or Ic and
40–99% by weight of short-chain units of the formula II.

10. Use of the block copolyesters according to Claims 1–8 for the production of mouldings.

**Revendications**

1. Copolyesters séquencés ayant une viscosité relative (mesurée dans le mélange phénol/o-dichlorobenzène, à des proportions relatives en poids de 1:1, à 25°C) de 1,15 à 3,0; consistant en – non tenu compte des groupes terminaux –
A) 1 à 60% en poids, par rapport au copolyester séquencé, de motifs à longue chaîne de formule

```
          O   O
          ||  ||
-O-M-O-C-S-C-                    Ia
```

et/ou

```
 O    O
 ||   ||
-C-M-C-O-G-O-                    Ib
```

et/ou

```
   O            O
   ||           ||
-O-C-O-M-O-C-O-G-O-              Ic
```

et

B) 40 à 99% en poids, par rapport au copolyester séquencé, de motifs à chaîne courte de formule

```
          O   O
          ||  ||
-O-G-O-C-S-C-                    II
```

et caractérisés en ce que:
M représente un reste polyméthylène divalent à sites de liaisons dans les positions terminales et poids moléculaire moyen $\overline{M}_n$ de 400 à 5000, les chaînes latérales éventuellement présentes pouvant consister uniquement en groupes méthyle et/ou éthyle et le reste de polydiène dont dérive le reste polyméthylène présentant au moins 50 moles% de liaison 1,4,
G représente un reste aliphatique divalent en $C_1$–$C_{12}$ et/ou un reste cycloaliphatique divalent en $C_6$–$C_{12}$ de poids moléculaire inférieur à 300, au moins 70 moles% de G consistant en un reste homogène,
S représente une liaison simple ou un reste aliphatique, cycloaliphatique et/ou aromatique divalent en $C_1$–$C_{14}$ et à un poids moléculaires inférieur à 300, au moins 70 moles% de S consistant en restes 1,4-phénylène.

2. Copolyesters séquencés selon la revendication 1, caractérisés en ce qu'ils ont une viscosité relative de 1,3 à 2,5.

3. Copolyesters séquencés selon les revendications 1 et 2, caractérisés en ce qu'ils consistent en:
10 à 50% en poids des motifs à longue chaîne A, et
90 à 50% en poids des motifs à chaîne courte B.

4. Copolyesters séquencés selon les revendications 1 à 3, caractérisés en ce que M a un poids moléculaire moyen $\overline{M}_n$ de 450 à 3000.

5. Copolyesters séquencés selon les revendications 1 à 4, caractérisés en ce que M a un poids moléculaire moyen $\overline{M}_n$ de 500 à 1200.

6. Copolyesters séquencés selon les revendications 1 à 5, caractérisés en ce que le reste de polydiène dont dérive le reste polyméthylène M présente au moins 70 moles% de liaisons 1,4.

7. Copolyesters séquencés selon les revendications 1 à 6, caractérisés en ce que S représente un reste 1,4-phénylène.

8. Copolyesters séquencés selon les revendications 1 à 7, caractérisés en ce que G représente un reste éthylène ou 1,4-butylène.

9. Procédé de préparation des copolyesters séquencés selon les revendications 1 à 8, caractérisé en ce que l'on transestérifie ou estérifie respectivement:
1. des polyméthylènes à groupes terminaux hydroxy, carboxyle, alkylcarboxy, cycloalkylcarboxy, benzylcarboxy, arylcarboxy, alkylcarbonate, cycloalkylcarbonate, benzylcarbonate ou arylcarbonate,
le reste de polyméthylène ayant des sites de liaisons dans les positions terminales et un poids moléculaire moyen $\overline{M}_n$ de 400 à 5000 (de préférence de 450 à 3000, plus spécialement de 500 à 1200) les chaînes latérales éventuellement présentes pouvant consister uniquement en groupes méthyle et éthyle et le reste de polydiène dont dérive le reste polyméthylène contenant au moins 50 moles% (de préférence au moins 70 moles%) de liaisons 1,4, avec
2. au moins un dérivé d'acide dicarboxylique de formule

```
   O   O
   ||  ||
R¹-OC-S-COR²
```

dans laquelle
$R^1$, $R^2$ représentent un atome d'hydrogène ou un groupe alkyle en $C_1$–$C_{10}$, et
S a la signification indiquée ci-dessus, et
3. au moins un diol de formule

HO–G–OH

dans laquelle G a la signification indiquée ci-dessus, puis on polycondense jusqu'à ce qu'on ait atteint la viscosité voulue, les quantités des composants de départ étant choisies de manière que le copolyester séquencé obtenu – non tenu compte des groupes terminaux – contienne
1 à 60% en poids des motifs à longue chaîne de formules Ia, Ib et/ou Ic, et 40 à 99% en poids des motifs à chaîne courte de formule II.

10. Utilisation des copolyesters séquencés selon les revendications 1 à 8 pour la fabrication d'objets moulés.